(19) **Europäisches Patentamt / European Patent Office / Office européen des brevets**

(11) **EP 1 480 019 B1**

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(51) Int Cl.:
**_G01F 1/84_** _(2006.01)_

(21) Anmeldenummer: **04010874.8**

(22) Anmeldetag: **07.05.2004**

(54) **Verfahren und Vorrichtung zur Messung eines Massestroms**

Method and device for measuring of a mass flow

Procédé et dispositif pour la mesure d'un débit massique

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.05.2003 DE 10322763**

(43) Veröffentlichungstag der Anmeldung:
**24.11.2004 Patentblatt 2004/48**

(73) Patentinhaber: **Bopp & Reuther Messtechnik Gmbh**
**67346 Speyer (DE)**

(72) Erfinder:
• **Jonuscheit, Horst**
**91080 Uttenreuth (DE)**
• **Peyerl, Peter, Dr.**
**98693 Ilmenau (DE)**
• **Zaschel, Jörg, Dr.**
**64367 Mühltal (DE)**

(74) Vertreter: **Reule, Hanspeter**
**Patentanwälte,**
**Wolf & Lutz,**
**Hauptmannsreute 93**
**70193 Stuttgart (DE)**

(56) Entgegenhaltungen:
**EP-A- 0 919 793      US-A- 4 680 974**
**US-A- 5 448 921**

**Beschreibung**

Die Erfindung betrifft ein Verfahren zur Messung eines Massestroms gemäß Oberbegriff des Anspruchs 1 sowie eine Vorrichtung zur Messung eines Massestroms gemäß Oberbegriff des Anspruchs 16.

Solche Verfahren und Vorrichtungen sind bekannt, beispielsweise aus der DE 4100006 A1. Dabei wird das in eine Rohrleitung eingebaute und mit dieser verbundene Messrohr von einem elektronischen Regelkreis in gleichmäßige Resonanzschwingungen versetzt. Die Sensoren, die die auf das Messrohr wirkende Corioliskraft aufnehmen, sind in diesen Regelkreis eingebunden. Um die äußerst schwachen Coriolissignale mit der erforderlichen Genauigkeit auswerten zu können, ist eine aufwendige mechanische und elektrische bzw. elektronische Gestaltung erforderlich. Die Fließgeschwindigkeit im Messrohr muss, um eine ausreichende Genauigkeit zu erhalten, über der Fließgeschwindigkeit in der Rohrleitung liegen. Auch lassen sich Gase mit den bekannten Vorrichtungen nur bei einer Dichte ab ca. 2 kg/m$^3$ ausreichend genau messen, was den Anwendungsbereich beschränkt.

Es ist daher Aufgabe der Erfindung, ein Verfahren und eine Vorrichtung der eingangs genannten Art derart weiterzubilden, dass sie weniger Aufwand erfordern.

Die Aufgabe wird erfindunsgemäß durch ein Verfahren gemäß Anspruch 1 und eine Vorrichtung gemäß Anspruch 16 gelöst.

Dieser erfindungsgemäßen Lösung liegt der Gedanke zugrunde, den Messaufwand zu reduzieren, indem das von den Sensoren erhaltene Signal durch ein mathematisches Verfahren analysiert und verarbeitet wird. Der Aufwand bei der Messung wird somit von den mechanischen und analogen elektronischen Komponenten zu den digitalen elektronischen Komponenten verlagert. Eine aufwendige elektronische Verarbeitung der Messdaten ist jedoch wesentlich einfacher durchzuführen, als eine hochpräzise mechanische Aufnahme von Messsignalen. Die Messung erfolgt mit weniger Energieaufwand, so dass das erfindungsgemäße Verfahren auch in einer Umgebung anwendbar ist, die eine hohe Explosionssicherheit erfordert. Insbesondere wenn das Messsignal der Sensoren über einen Analog-Digital-Wandler an den digitalen Signalprozessor übermittelt und von diesem in seine spektralen Bestandteile zerlegt wird, ist eine hochgenaue Messung bei vertretbarem Aufwand für die mechanischen Sensoren durchführbar. Die spektralen Bestandteile, in die das Messsignal zerlegt wird, weisen vorzugsweise die gleichen Frequenzen auf wie die an das Messrohr übermittelten Sinusschwingungen. Zweckmäßig liegen die diskreten Frequenzen in einem Frequenzfenster, dass die Resonanzfrequenz der Schwingung des Messrohrs beinhaltet. Das Frequenzfenster hat vorzugsweise eine Breite von 7 bis 25 Hz und die diskreten Frequenzen unterscheiden sich um Bruchteile eines Hertz bis mehrere Hertz.

Gemäß einer vorteilhaften Ausgestaltung der Erfindung wird aus den für die spektralen Anteile gemessenen Amplituden die Resonanzfrequenz berechnet. Anhand der berechneten Resonanzfrequenz wird die Dichte des im Messrohr enthaltenen Stoffes berechnet. Die Resonanzfrequenz wird auch zur Bestimmung der Masse herangezogen. Eine besonders einfache und ausreichend genaue Berechnung der Resonanzfrequenz wird anhand von drei spektralen Bestandteilen des Messsignals durchgeführt. Hierbei wird ein Gleichungssystem mit den unbekannten Parametern Güte, Resonanzfrequenz und Amplitude in Resonanz gelöst. Vorzugsweise werden zur Lösung des Gleichungssystems der spektrale Bestandteil mit der höchsten Amplitude und die beiden zu ihm benachbarten Bestandteile verwendet.

Bevor das Messrohr in die alternierende Drehbewegung versetzt wird, kann in besonders vorteilhafter Weise eine Näherungsbestimmung der Resonanzfrequenz durchgeführt werden. Hierzu wird eine vorgeschaltete alternierende Drehbewegung durch Überlagerung mehrerer Sinusschwingungen erzeugt. Die Frequenzen dieser Sinusschwingungen erstrecken sich mit großem gegenseitigem Anstand über einen weiten Frequenzbereich. Aus dem spektralen Bestandteil des Messsignals mit der größten Amplitude und den zu ihm benachbarten Bestandteilen wird durch Lösung des oben beschriebenen Gleichungssystems ein Näherungswert für die Resonanzfrequenz bestimmt. Nach dieser Näherungsbestimmung wird die oben beschriebene Drehbewegung dem Messrohr aufgeprägt, wobei das Frequenzfenster den Näherungswert für die Resonanzfrequenz beinhaltet.

Wenn sich die Resonanzfrequenz um einen Wert ändert, der größer ist als ein vorgegebener Schwellwert, wird das Frequenzfenster zweckmäßig in Richtung der Änderung verschoben, so dass eine gleitende Frequenznachführung erhalten wird. Es ist von Vorteil, wenn bei einer sprunghaften Änderung der Resonanzfrequenz, also wenn die Änderungsrate der Resonanzfrequenz einen vorgegebenen Wert überschreitet, eine erneute Näherungsbestimmung der Resonanzfrequenz durchgeführt wird.

Die Corioliskraft, aus der der Massedurchfluss berechnet werden kann, wird vorzugsweise dadurch bestimmt, dass mindestens zwei symmetrisch zur durch die Messrohrmitte verlaufenden Drehachse angeordnete Sensoren die Bewegung des Messrohrs aufnehmen. Deren Messsignale werden in ihre spektralen Bestandteile zerlegt. Die spektralen Bestandteile der beiden Messsignale werden jeweils wie oben beschrieben bei einer bestimmten Frequenz verglichen und aus ihrer Phasendifferenz wird die Corioliskraft bestimmt. Dabei können alternativ entweder die beiden Bestandteile herangezogen werden, die die größte Amplitude aufweisen, oder aber die beiden Bestandteile, die die geringsten Störeinflüsse aufweisen. Ein Maß für die Störeinflüsse kann die Linienbreite des spektralen Bestandteils sein.

Das Messrohr ist zweckmäßig beweglich in eine Rohrleitung integriert und mit dieser durch dehnbare Tragelemente verbunden. Die Tragelemente sind vorzugsweise in der Drehrichtung weniger steif ausgebildet als in den anderen Raumrichtungen. Einen besonders vorteilhaften Aufbau erhält man, wenn das Messrohr und die Tragelemente einstückig ausgebildet sind, vorzugsweise als Formteil aus Kunststoff.

Die Sensoren sind in einer vorteilhaften Ausgestaltung der Erfindung an den Tragelementen angebrachte Dehnungsmessstreifen. Diese erlauben eine besonders einfache Messung. Vorteilhaft ist auch eine Ausbildung der Sensoren als Hall-Sensoren, die die Dehnung der Tragelemente über einen Hall-Effekt messen. Um das Messrohr herum ist zweckmäßig ein Gehäuse angeordnet, um das Messrohr vor Störeinflüssen zu schützen. Vorzugweise sind die Tragelemente abnehmbar an der Rohrleitung befestigt, so dass das Messrohr leicht austauschbar ist. Um die Austauschbarkeit des Messrohrs zu ermöglichen weist das Gehäuse vorteilhafterweise einen abnehmbaren Deckel auf. Eine vorteilhafte Ausgestaltung der Erfindung sieht zwei symmetrisch zur Rohrmitte angebrachte Erreger vor. Dadurch wird die Drehbewegung symmetrisch stabilisiert. Die Erreger sind vorzugsweise Tauchspulen. Wenn die auf das Messrohr wirkenden Rückstellkräfte klein sind, ist es von Vorteil, wenn die Erreger einen elektrodynamischen Antrieb bilden, der mindestens einen von einer Statorspule umgebenden Magneten aufweist, der mit dem Messrohr stark verbunden ist und in einer Führung bis zu einem Anschlag beweglich gelagert ist. Der Anschlag begrenzt dann die Bewegung des Messrohrs.

In einer Weiterbildung der Erfindung sind aktive Tilger zur Kompensation der durch die Corioliskräfte verursachten Bewegung des Messrohrs vorgesehen. Diese Bewegung wird dann durch die Tilger dynamisch kompensiert. Das Stellsignal der Tilger ist zugleich das Messsignal.

Eine weitere Abschirmung von äußeren Störeinflüssen erhält man, indem ein das Messrohr umschließender Rohrträger an den Tragelementen befestigt ist.

Im Folgenden wird die Erfindung anhand der in der Zeichnung schematisch dargestellten Ausführungsbeispiele näher erläutert. Es zeigen

Fig. 1 ein Flussdiagramm für eine erste Ausführungsform des erfin- dungsgemäßen Verfahrens;

Fig. 2 ein Flussdiagramm für eine zweite Ausführungsform des erfin- dungsgemäßen Verfahrens;

Fig. 3 eine schematische Darstellung einer ersten Ausführungsform der erfindungsgemäßen Vorrichtung;

Fig. 4 eine schematische Darstellung einer zweiten Ausführungsform der erfindungsgemäßen Vorrichtung;

Fig. 5 eine schematische Darstellung einer Ausführungsform für den Erreger.

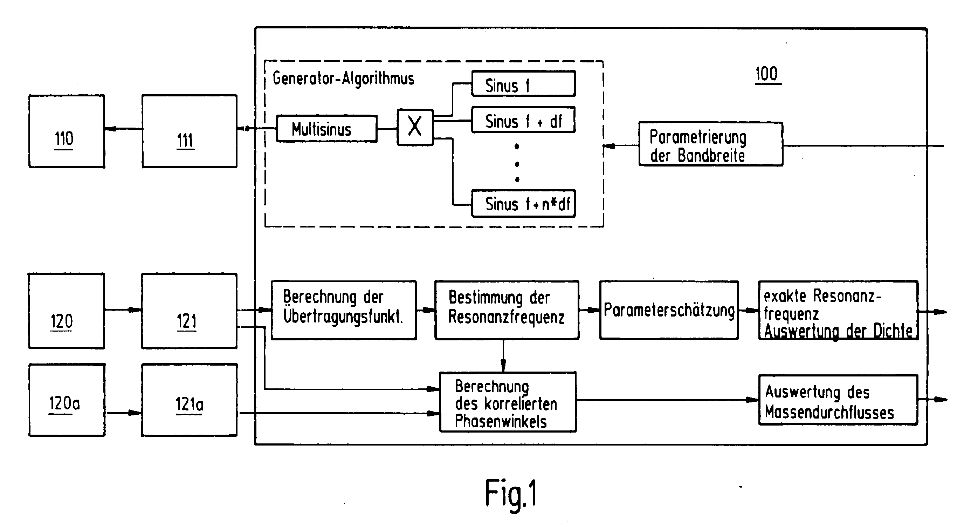

Ein digitaler Signalprozessor 100 (Fig. 1) erzeugt eine Vielzahl von Sinusschwingungen mit den Frequenzen f, f + df, ... f + n·df, die einander überlagert ein Multisinussignal ergeben. Dieses Multisinussignal wird in einem Digital-Analog-Wandler 111 in ein analoges Signal umgewandelt und einem Erreger 110 zugeführt, der ein Messrohr in eine alternierende Drehbewegung versetzt. Das Messrohr, das in Fig. 1 nicht dargestellt ist, ist um eine senkrecht zu seiner Längsachse durch die Rohrmitte verlaufende Achse drehbar gelagert. Durch dieses Messrohr wird ein zu bestimmender Massestrom von flüssigen, gasförmigen oder festen Stoffen hindurchgeleitet. Die Bewegung des Messrohrs, die aus der durch den Erreger ausgeübten Kraft und die vom Massestrom herrührende Corioliskraft bewirkt wird, wird von zwei symmetrisch zur Messrohrmitte angeordneten Sensoren 120,120a aufgenommen, deren Signale in Analog-Digital-Wandlern 121,121a in digitale Signale verarbeitet und dem digitalen Signalprozessor 100 zugeführt werden. Dazu werden die Analog-Digital-Wandler 121,121 a synchron zum Digital-Analog-Wandler 111 getaktet. Für das Signal des Analog-Digital-Wandlers 121 wird durch den Signalprozessor 100 die Übertragungsfunktion in Takten von typischerweise 2 bis 50ms berechnet. Hierbei wird das Signal in seine diskreten spektralen Bestandteile zerlegt. Die Frequenzen der spektralen Bestandteile sind dabei die Frequenzen f, f + df, ..., f + n·df, aus denen das Multisinussignal des Signalprozessors 100 zusammengesetzt ist. Aus dem so erhaltenen Spektrum wird durch ein Näherungsverfahren die Resonanzfrequenz des Messrohrs bestimmt. Für die Näherungsbestimmung werden der spektrale Bestandteil mit der höchsten Amplitude sowie die beiden zu ihm benachbarten spektralen Bestandteile des Messsignals verwendet. Diese drei Wertepaare aus Frequenz und zugehöriger Amplitude werden in das folgende Gleichungssystem eingesetzt:

$$U_n = \frac{U_0}{\sqrt{1 + \left[ Q \cdot \left( \frac{f_n}{f_0} - \frac{f_o}{f_n} \right) \right]^2}}$$

Dabei ist $U_0$ die Amplitude bei Resonanz, Q die Güte und $f_0$ die Resonanzfrequenz, n nimmt die Werte 1 bis 3 an. Das Gleichungssystem wird numerisch gelöst und somit die Resonanzfrequenz $f_0$ durch das der Parameterschätzung dienende Näherungsverfahren bestimmt. Aus der Resonanzfrequenz errechnet sich die Masse und die Dichte des im Messrohr enthaltenen Stoffes.

Die Corioliskraft, aus der sich der Massefluss im Messrohr errechnen lässt, wird durch eine Messung der Phasendifferenz zwischen den Signalen des Sensors 120 und den Signalen des Sensors 120a bestimmt. Hierzu wird von jedem Signal der spektrale Bestandteil einer bestimmten Frequenz verwendet und die Phasendifferenz zwischen den spektralen Bestandteilen der beiden Sensorsignale ermittelt. Aus dieser Phasendifferenz errechnet sich die Corioliskraft und der Massedurchfluss gemäß dem folgenden Prinzip:

Jeder Sensor (charakterisiert durch die Indizes 2 und 3) erfasst die Überlagerung der Anteile aus Schwingungserregung

$$u_2{}^A(t) = u_3{}^A(t) = K_A \sin \delta_0 t$$

und der Corioliskraft

$$u_2{}^C(t) = -u_3{}^C(t) = K_C \, (\delta m / \delta t) \cos \delta_0 t \, .$$

Damit erhält man:

$$u_2(t) = u_0 \sin (\delta_0 t + \phi) \;\; \text{und} \;\; u_3(t) = u_0 \sin (\delta_0 t - \phi).$$

Zwischen dem spektralen Bestandteil des Sensors 120 und dem des Sensors 120a besteht somit eine Phasendifferenz von $2\phi$, die vom digitalen Signalprozessor 100 ermittelt wird. Mit

$$\phi = \arctan(K_C \cdot (\delta m / \delta t)) / K_A)$$

lässt sich die Corioliskraft $K_C$ aus der gemessenen Phasendifferenz berechnen.

Für diese Auswertung können prinzipiell spektrale Bestandteile bei einer beliebigen Frequenz verwendet werden, wobei von beiden Messsignalen spektrale Bestandteile mit der gleichen Frequenz verwendet werden müssen. Es empfiehlt sich aber, diejenigen spektralen Bestandteile zur Auswertung heranzuziehen, deren Frequenz gleich der Resonanzfrequenz ist bzw. dieser am nächsten kommen. Diese spektralen Bestandteile haben eine besonders große Amplitude und ein gutes Signal-Rausch-Verhältnis, was eine Bestimmung der Phasendifferenz mit größerer Genauigkeit ermöglicht. Es ist auch möglich, denjenigen spektralen Bestandteil zur Auswertung heranzuziehen, der den geringsten Störeinflüssen unterworfen ist. Dieser Bestandteil hat eine besonders schmale Spektrallinie. Seine Verwendung führt ebenfalls zu genaueren Auswerteergebnissen und ist besonders dann von Vorteil, wenn die Resonanzfrequenz schwierig oder gar nicht bestimmbar ist.

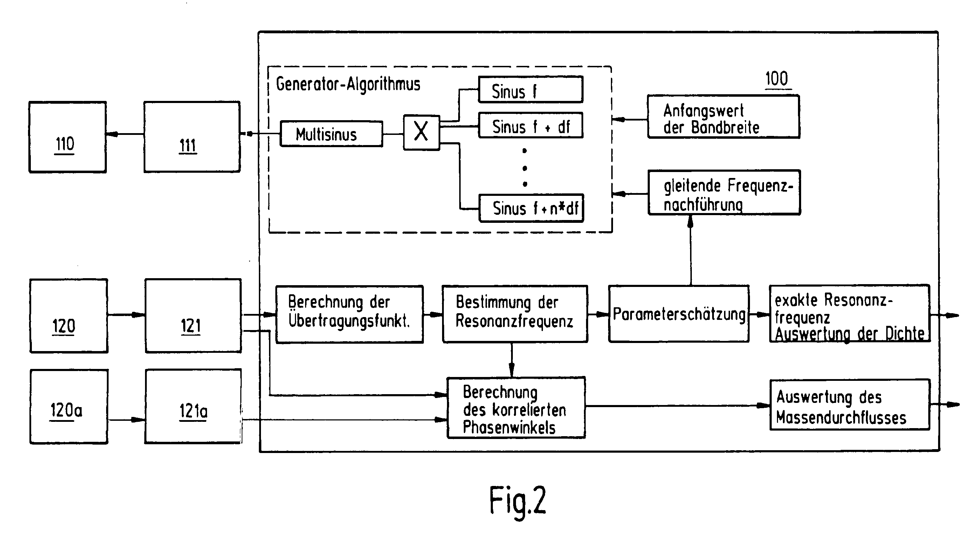

Bei dem in Fig. 1 dargestellten Verfahren wird die Bandbreite des Multisinussignals, dessen Frequenzen in einem Frequenzfenster zwischen f und f+n·df liegen, von außen vorgegeben. Es ist jedoch sinnvoll, das Frequenzfenster so zu legen, dass es die Resonanzfrequenz enthält, da bei einer Anregung des Messrohrs mit der Resonanzfrequenz das von den Sensoren 120,120a aufgenommene Messsignal maximal wird. Daher wird in einer Weiterentwicklung des Verfahrens gemäß Fig. 2 nach der ersten näherungsweisen Bestimmung der Resonanzfrequenz das Frequenzfenster so angepasst, dass der Näherungswert für die Resonanzfrequenz in der Mitte des Frequenzfensters liegt. Man erhält damit eine gleitende Frequenznachführung, die sicherstellt, dass bei sich ändernder Resonanzfrequenz das Frequenzfenster des Multisinussignals stets an die Resonanzfrequenz angepasst ist. Vor Beginn der Corioliskraftmessung wird dem Erreger 110 ein Multisinussignal zugeführt, das aus einer Überlagerung von Sinusschwingungen besteht, die einen sehr breiten Frequenzbereich abdecken. Nach einer ersten näherungsweisen Bestimmung der Resonanzfrequenz, wie oben beschrieben, wird dann das Multisinussignal auf das Frequenzfenster mit Frequenzen zwischen f und f+n·df eingegrenzt, wobei typische Werte df = ca. 1 Hz und n = 7 bis n=25 sind.

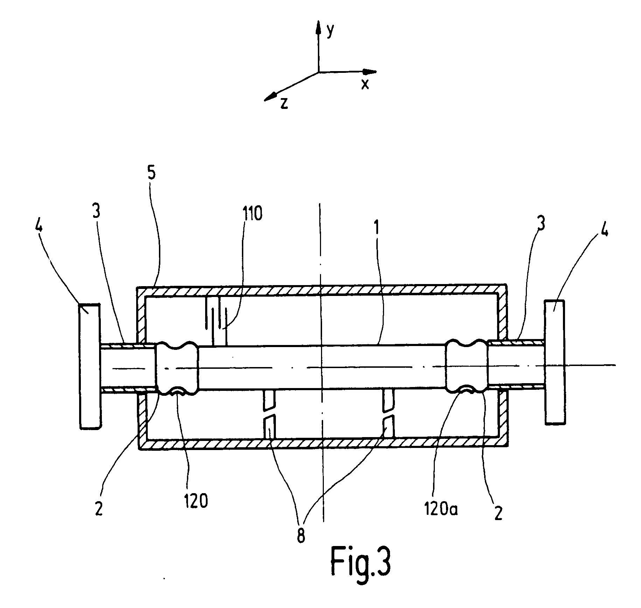

Eine erfindungsgemäße Vorrichtung gemäß Fig. 3 weist ein Messrohr 1 zum Durchleiten eines Massestroms auf, das über dehnbare Tragelemente 2 an Zu- und Abläufen 3 befestigt ist, die mittels Flanschen 4 an eine Rohrleitung anschließbar sind. Die Tragelemente 2 sind in der Weise dehnbar, dass das Rohr um die durch seine Mitte senkrecht zu seiner Längsachse verlaufende Z-Achse in eine alternierende Drehbewegung versetzt werden kann, die das Rohr um die Z-Achse hin- und herdreht. Die Drehbewegung wird dem Messrohr 1 über einen Erreger 110 aufgeprägt. An den Tragelementen sind symmetrisch zur Drehachse Sensoren 120,120a angebracht, die die Drehbewegung des Messrohrs aufnehmen. Der Erreger 110 und die Sensoren 120,120a entsprechen dabei dem Erreger 110 und den Sensoren 120,120a aus Fig. 1. Die Sensoren 120,120a sind im hier gezeigten Ausführungsbeispiel als Dehnungsmessstreifen ausgebildet. Diese Ausbildung ist jedoch nicht zwingend. Als Sensoren 120,120a kommen des weiteren alle herkömmlichen Weg-, Geschwindigkeits- oder Beschleunigungssensoren in Frage. Vorteilhaft ist auch eine Ausbildung der Sensoren 120,120a als Hall-Sensoren, die die Dehnung der Tragelemente 2 über einen Hall-Effekt messen.

Im hier gezeigten Ausführungsbeispiel sind das Messrohr 1 und die Tragelemente 2 einstückig aus Kunststoff ausgebildet. Es sind jedoch auch andere Ausführungsformen denkbar, insbesondere eine Ausbildung des Messrohrs 1 aus Metall. Die Tragelemente sind dann zweckmäßig Wellschläuche. Die Verbindung zwischen den Tragelementen 2 und den Zu- bzw. Abläufen 3 kann als lösbare Klemmung, aber auch als Klebung oder Schweißung, insbesondere Laserschweißung ausgeführt sein. Im vorliegenden Fall sind die Tragelemente 2 mit den Zu-/Abläufen 3 durch eine Klemmung verbunden, so dass das Messrohr ausgetauscht werden kann. Das Messrohr 1 ist zum Schutz gegen äußere Störeinflüsse durch ein Gehäuse 5 umgeben. Das Gehäuse 5 dient neben dem Schutz des Messrohrs 1 gegen die Umgebung insbesondere zur Ableitung von inneren und äußeren Störschwingungen. Dazu ist sein Schallleitwert typisch jeweils etwa zehnmal höher als der des Messrohrs 1 und der Tragelemente 2. Das Gehäuse 5 weist einen abnehmbaren Deckel auf, um das Messrohr 1 leicht austauschen zu können. Die durch die vom Massestrom hervorgerufene Corioliskraft herrührende Messbewegung des Messrohrs 1 wird durch aktive Tilger 8 dynamisch kompensiert. Das Stellsignal der Tilger 8 ist dann zugleich das Messsignal.

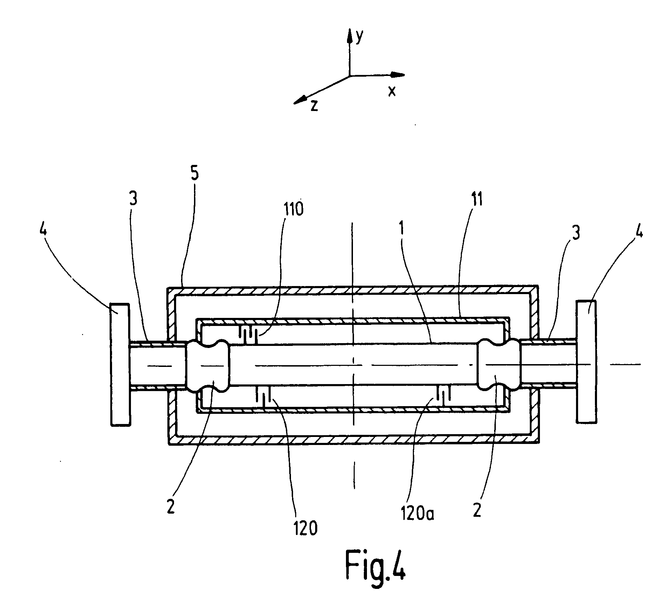

Die Ausführungsform gemäß Fig. 4 unterscheidet sich von der Ausführungsform gemäß Fig. 3 dadurch, dass statt der Dehnungsmessstreifen herkömmliche Wegsensoren 120,120a verwendet werden. Ein weiterer Unterschied besteht darin, dass innerhalb des Gehäuses 5 ein das Messrohr umschließender Rohrträger 11 angebracht ist. Der Rohrträger 11 ist an den Tragelementen 2 befestigt und dient als dynamischer Stabilisator, der besonders starke Schwingungsstörungen aus der Prozessumgebung vom Messrohr 1 fernhält.

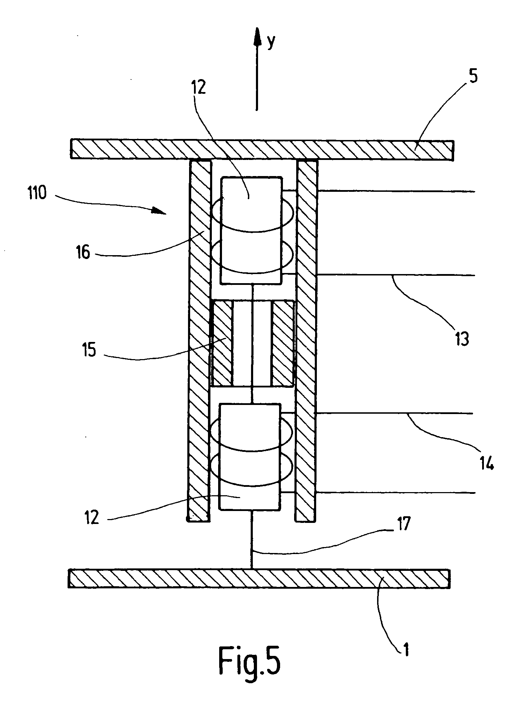

Wenn die Rückstellkräfte der Tragelemente 2 klein sind, ist es vorteilhaft, den Erreger 110 gemäß Fig. 5 auszugestalten. Der Erreger weist zwei Magnete 12 auf, die miteinander starr verbunden sind und in einer Führung 15 geführt sind. Über eine Stange 17 sind die Magnete 12 mit dem Messrohr 1 verbunden. Die Führung 15 ist über ein Führungsgehäuse 16 mit dem Gehäuse 5 verbunden. Um die Magnete 12 sind Statorspulen 13,14 gewickelt, durch die die Magnete 12 in Y-Richtung bewegbar sind. Die Führung 15 bildet einen Anschlag für die Magnete 12 und begrenzt damit die Bewegung des Messrohrs 1. Gleichzeitig verhindert sie ein Ausrasten der Erregeranordnung 110.

Zusammenfassend ist folgendes festzuhalten: Die Erfindung betrifft ein Verfahren und eine Vorrichtung zur Messung eines Massestroms von flüssigen, gasförmigen oder festen Stoffen, der durch ein Messrohr 1 geleitet wird. Das Messrohr 1 ist um eine quer, vorzugsweise senkrecht zu seiner Längsachse verlaufende Achse drehbar gelagert und wird in eine alternierende Drehbewegung versetzt, wobei zur Bestimmung des Massestroms durch mindestens einen Sensor 120,120a die auf das Messrohr wirkende Corioliskraft gemessen wird. Erfindungsgemäß ist vorgesehen, dass die Drehbewegung durch eine Überlagerung mehrerer, in einem digitalen Signalprozessor 100 generierter und über einen Digital-Analog-Wandler 111 gleichzeitig an das Messrohr 1 übermittelter Sinusschwingungen mit verschiedenen diskreten Frequenzen erzeugt wird.

## Patentansprüche

1. Verfahren zur Messung eines Massestroms von flüssigen, gasförmigen oder festen Stoffen, der durch ein Messrohr (1) geleitet wird, welches um eine quer, vorzugsweise senkrecht zu seiner Längsachse verlaufende Achse drehbar gelagert ist und in eine alternierende Drehbewegung versetzt wird, wobei zur Bestimmung des Massestroms durch mindestens einen Sensor (120, 120a) die auf das Messrohr (1) wirkende Corioliskraft gemessen wird, **dadurch gekennzeichnet, dass** die Drehbewegung durch eine Überlagerung mehrerer, in einem digitalen Signalprozessor (100) generierter und über einen Digital-Analog-Wandler (111) an das Messrohr (1) übermittelter Sinusschwingungen mit verschiedenen diskreten Frequenzen erzeugt wird.

**2.** Verfahren nach Anspruch 1, **dadurch gekennzeichnet, dass** die diskreten Frequenzen in einem Frequenzfenster liegen, das die Resonanzfrequenz der Schwingung des Messrohrs (1) beinhaltet.

**3.** Verfahren nach Anspruch 2, **dadurch gekennzeichnet, dass** das Frequenzfenster eine Breite von 7 bis 25 Hz hat und die diskreten Frequenzen sich jeweils um Bruchteile eines Hertz bis mehrere Hertz unterscheiden.

**4.** Verfahren nach einem der vorangehenden Ansprüche, **dadurch gekennzeichnet, dass** das Messsignal des oder der Sensoren (120, 120a) über Analog-Digital-Wandler (121, 121a) an den digitalen Signalprozessor (100) übermittelt und von diesem in seine spektralen Bestandteile zerlegt wird.

**5.** Verfahren nach Anspruch 4, **dadurch gekennzeichnet, dass** die spektralen Bestandteile des Messsignals die gleichen Frequenzen aufweisen wie die an das Messrohr (1) übermittelten Sinusschwingungen.

**6.** Verfahren nach Anspruch 4 oder 5, **dadurch gekennzeichnet, dass** aus den für die spektralen Bestandteile gemessenen Amplituden die Resonanzfrequenz berechnet wird.

**7.** Verfahren nach Anspruch 6, **dadurch gekennzeichnet, dass** zur Berechnung der Resonanzfrequenz der spektrale Bestandteil mit der höchsten Amplitude und die beiden zu ihm benachbarten Bestandteile zur Lösung eines Gleichungssystems mit den zu bestimmenden Parametern Güte, Resonanzfrequenz und Amplitude in Resonanz verwendet werden.

**8.** Verfahren nach einem der Ansprüche 6 oder 7, **dadurch gekennzeichnet, dass** mittels der berechneten Resonanzfrequenz die Masse des im Messrohr (1) enthaltenen Stoffes und seine Dichte ermittelt wird.

**9.** Verfahren nach einem der Ansprüche 2 bis 8, **dadurch gekennzeichnet, dass** vorab eine Näherungsbestimmung der Resonanzfrequenz durchgeführt wird, indem eine vorgeschaltete alternierende Drehbewegung durch Überlagerung mehrerer Sinusschwingungen erzeugt wird, deren diskrete Frequenzen sich mit großem gegenseitigem Abstand über einen weiten Frequenzbereich erstrecken, dass mittels des spektralen Bestandteils mit der größten Amplitude und den zu ihm benachbarten Bestandteilen ein Näherungswert für die Resonanzfrequenz bestimmt wird, und dass das Frequenzfenster der auf die vorgeschaltete Drehbewegung nachfolgenden Drehbewegung den Näherungswert inhaltet.

**10.** Verfahren nach einem der Ansprüche 2 bis 9, **dadurch gekennzeichnet, dass** bei einer Änderung der Resonanzfrequenz das Frequenzfenster in Richtung der Änderung verschoben wird.

**11.** Verfahren nach Anspruch 10, **dadurch gekennzeichnet, dass** das Frequenzfenster nur verschoben wird, wenn sich die Resonanzfrequenz mindestens um einen vorgegebenen Wert ändert.

**12.** Verfahren nach einem der Ansprüche 9 bis 11, **dadurch gekennzeichnet, dass** eine erneute Näherungsbestimmung der Resonanzfrequenz durchgeführt wird, wenn die Änderungsrate der Resonanzfrequenz einen vorgegebenen Wert überschreitet.

**13.** Verfahren nach einem der vorangehenden Ansprüche, **dadurch gekennzeichnet, dass** mindestens zwei spiegelbildlich zur Messrohrmitte und zur Drehachse angeordnete Sensoren (120, 120a) die Bewegung des Messrohrs (1) aufnehmen, dass die Messsignale über Analog-Digital-Wandler (121, 121a) an den digitalen Signalprozessor (100) übermittelt und von diesem in ihre spektralen Bestandteile zerlegt werden, und dass aus einer Phasendifferenz von spektralen Bestandteilen gleicher Frequenz, gemessen von verschiedenen Sensoren (120, 120a), die Corioliskraft bestimmt wird.

**14.** Verfahren nach Anspruch 13, **dadurch gekennzeichnet, dass** die Phasendifferenz der spektralen Bestandteile mit der höchsten Amplitude für die Bestimmung der Corioliskraft verwendet wird.

**15.** Verfahren nach Anspruch 13, **dadurch gekennzeichnet, dass** die Phasendifferenz der spektralen Bestandteile mit den geringsten Störeinflüssen für die Bestimmung der Corioliskraft verwendet wird.

**16.** Vorrichtung zur Messung eines Massestroms von flüssigen, gasförmigen oder festen Stoffen, mit einem um eine quer, vorzugsweise senkrecht zu seiner Längsachse verlaufenden Achse drehbar gelagerten Messrohr (1) zur Durchleitung des Massestroms, mit mindestens einem Erreger (110) zur Erzeugung einer alternierenden Drehbewegung des Messrohrs (1) und mindestens einem Sensor (120, 120a) zur Messung der Bewegung des Messrohrs (1), wobei der oder die Sensoren (120, 120a) über Analog-Digital-Wandler (121, 121a) mit einem digitalen Signalprozessor (100) zur Auswertung der Messergebnisse verbunden sind, **dadurch gekennzeichnet, dass** durch den digitalen Signalprozessor (100) ein aus mehreren Sinusschwingungen mit diskreten Frequenzen bestehendes Signal generierbar und über einen Digital-Analog-Wandler (111) an den oder die Erreger (110) zur Erzeugung der Drehbewegung des Messrohrs (1) übermittelbar ist.

17. Vorrichtung nach Anspruch 16, **dadurch gekennzeichnet, dass** die Drehachse durch die Messrohrmitte verläuft.

18. Vorrichtung nach einem der Ansprüche 16 oder 17, **gekennzeichnet durch** zwei symmetrisch zur Messrohrmitte angeordnete Sensoren (120, 120a).

19. Vorrichtung nach einem der Ansprüche 16 bis 18, **dadurch gekennzeichnet, dass** das Messrohr (1) beweglich in eine Rohrleitung integriert und mit dieser durch dehnbare Tragelemente (2) verbunden ist.

20. Vorrichtung nach Anspruch 19, **dadurch gekennzeichnet, dass** die Tragelemente (2) in Drehrichtung weniger steif ausgebildet sind als in den anderen Raumrichtungen.

21. Vorrichtung nach Anspruch 19 oder 20, **dadurch gekennzeichnet, dass** das Messrohr (1) und die Tragelemente (2) einstückig ausgebildet sind, vorzugsweise als Formteil aus Kunststoff.

22. Vorrichtung nach einem der Ansprüche 19 bis 21, **dadurch gekennzeichnet, dass** die Tragelemente (2) abnehmbar an der Rohrleitung befestigt sind.

23. Vorrichtung nach einem der Ansprüche 19 bis 22, **dadurch gekennzeichnet, dass** die Sensoren (120, 120a) an den Tragelementen (2) angebrachte Dehnungsmessstreifen sind.

24. Vorrichtung nach einem der Ansprüche 19 bis 22, **dadurch gekennzeichnet, dass** die Sensoren (120, 120a) an den Tragelementen (2) angebrachte Hall-Sensoren sind.

25. Vorrichtung nach einem der Ansprüche 16 bis 24, **gekennzeichnet durch** zwei symmetrisch zur Rohrmitte angebrachte Erreger (110).

26. Vorrichtung nach einem der Ansprüche 16 bis 25, **gekennzeichnet durch** aktive Tilger (8) zur Kompensation der **durch** die Corioliskräfte verursachten Bewegung des Messrohrs (1).

27. Vorrichtung nach einem der Ansprüche 16 bis 26, **dadurch gekennzeichnet, dass** um das Messrohr (1) herum ein Gehäuse (5) angeordnet ist.

28. Vorrichtung nach Anspruch 27, **dadurch gekennzeichnet, dass** das Gehäuse (5) einen abnehmbaren Deckel aufweist.

29. Vorrichtung nach einem der Ansprüche 16 bis 28, **gekennzeichnet durch** einen an den Tragelementen (2) befestigten, das Messrohr (1) umschließenden Rohrträger (11).

30. Vorrichtung nach einem der Ansprüche 16 bis 29, **dadurch gekennzeichnet, dass** die Erreger (110) Tauchspulen sind.

31. Vorrichtung nach einem der Ansprüche 16 bis 30, **dadurch gekennzeichnet, dass** der oder die Erreger (110) einen elektrodynamischen Antrieb bilden und mindestens einen von einer Statorspule (13, 14) umgebenen Magneten (12) aufweisen, der mit dem Messrohr (1) starr verbunden ist und in einer Führung (15, 16) bis zu einem Anschlag beweglich gelagert ist.

**Claims**

1. Method for measuring a mass flow of liquid, gaseous or solid materials which is guided through a measurement pipe (1) which is mounted so that it can rotate about an axis running crosswise, preferably perpendicularly to its longitudinal axis, and is put into an alternating rotational movement, wherein the Coriolis force acting on the measurement pipe (1) is measured to determine the mass flow by means of at least one sensor (120, 120a), **characterized in that** the rotational movement is generated by superposition of a number of sinusoidal vibrations with different discrete frequencies that are generated in a digital signal processor (100) and then applied to the measurement pipe (1) via a digital to analogue converter (111).

2. Method according to Claim 1, **characterized in that** the discrete frequencies lie in a frequency window which contains the resonant frequency of the vibration of the measurement pipe (1).

3. Method according to Claim 2, **characterized in that** the frequency window has a width of 7 to 25 Hz and the discrete frequencies differ in each case by fractions of 1 Hz up to several Hz.

4. Method according to any one of the preceding claims, **characterized in that** the measuring signal of the sensor(s) (120, 120a) is transmitted via analogue to digital converters (121, 121a) to the digital signal processor (100) and divided by this into its spectral components.

5. Method according to Claim 4, **characterized in that** the spectral components of the measuring signal have the same frequencies as the sinusoidal vibrations applied to the measurement pipe (1).

6. Method according to Claim 4 or 5, **characterized in that** the resonant frequency is computed from the amplitudes measured for the spectral components.

7. Method according to Claim 6, **characterized in that** the spectral component with the highest amplitude is used to compute the resonant frequency and the two components adjacent to it are used to solve a set of equations with the parameters of quality factor, resonant frequency and amplitude at resonance to be determined.

8. Method according to either of Claims 6 and 7, **characterized in that** the mass of the material contained in the measurement pipe (1) and its density are determined by means of the computed resonant frequency.

9. Method according to any one of Claims 2 to 8, **characterized in that** firstly the approximate resonant frequency is determined by an upstream alternating rotational movement being generated by superposition of a number of sinusoidal vibrations, whose discrete frequencies extend over a wide frequency range with large equal distances, **in that** an approximate value is determined for the resonant frequency by means of the spectral component with the largest amplitude and the components adjacent thereto, and **in that** the frequency window of the rotational movement following the upstream rotational movement contains the approximate value.

10. Method according to any one of Claims 2 to 9, **characterized in that** in the event of a change in resonant frequency, the frequency window is moved in the direction of the change.

11. Method according to Claim 10, **characterized in that** the frequency window is only moved if the resonant frequency changes at least by a given value.

12. Method according to any one of Claims 9 to 11, **characterized in that** determination of the approximate resonant frequency is repeated if the change rate of the resonant frequency exceeds a given value.

13. Method according to any one of the preceding claims, **characterized in that** at least two sensors (120, 120a) arranged in mirror-image to the centre of the measurement pipe and to the axis of rotation record the movement of the measurement pipe (1), **in that** the measuring signals are transmitted via analogue to digital converters (121, 121a) to the digital signal processor (100) and divided by this into their spectral components, and **in that** the Coriolis force is determined from a phase difference of spectral components of equal frequency, measured by different sensors (120, 120a).

14. Method according to Claim 13, **characterized in that** the phase difference of the spectral components with the highest amplitude is used to determine the Coriolis force.

15. Method according to Claim 13, **characterized in that** the phase difference of the spectral components with the least noise interference is used to determine the Coriolis force.

16. Device for measuring a mass flow of liquid, gaseous or solid material, with a measurement pipe (1) mounted so that it can rotate about an axis running crosswise, preferably perpendicularly to its longitudinal axis for conducting the mass flow, with at least one exciter (110) to generate an alternating rotational movement of the measurement pipe (1) and at least one sensor (120, 120a) to measure the movement of the measurement pipe (1), wherein the sensor (s) (120, 120a) are connected via analogue to digital converters (121, 121a) to a digital signal processor (100) to evaluate the measurement results, **characterized in that** a signal consisting of a plurality of sinusoidal vibrations with discrete frequencies can be generated by the digital signal processor (100) and transmitted via a digital to analogue converter (111) to the exciter(s) (110) in order to generate the rotational movement of the measurement pipe (1).

17. Device according to Claim 16, **characterized in that** the axis of rotation runs through the centre of the measurement pipe.

18. Device according to either of Claims 16 and 17, **characterized by** two sensors arranged symmetrically to the centre of the measurement pipe (120, 120a).

19. Device according to any one of Claims 16 to 18, **characterized in that** the measurement pipe (1) is displaceably integrated into a pipeline and connected thereto by flexible support elements (2).

20. Device according to Claim 19, **characterized in that** the support elements (2) are formed less rigidly in the direction of rotation than in the other spatial directions.

21. Device according to Claim 19 or 20, **characterized in that** the measurement pipe (1) and the support elements (2) are integrally formed, preferably as a moulded plastic part.

22. Device according to any one of Claims 19 to 21, **characterized in that** the support elements (2) are detachably fastened to the pipeline.

23. Device according to any one of Claims 19 to 22, **characterized in that** the sensors (120, 120a) are strain gauges attached to the support elements (2).

24. Device according to any one of Claims 19 to 22, **characterized in that** the sensors (120, 120a) are echo sensors attached to the support elements (2).

25. Device according to any one of Claims 16 to 24, **characterized by** two exciters (110) symmetrically attached to the centre of the pipe.

26. Device according to any one of Claims 16 to 25, **characterized by** active tuned mass dampers (8) to compensate for the movement of the measurement pipe (1) caused by the Coriolis forces.

27. Device according to any one of Claims 16 to 26, **characterized in that** a housing (5) is arranged around the measurement pipe (1).

28. Device according to Claim 27, **characterized in that** the housing (5) has a removable cover.

29. Device according to any one of Claims 16 to 28, **characterized by** a pipe support (11) fastened to the support elements (2) surrounding the measurement pipe (1).

30. Device according to any one of Claims 16 to 29, **characterized in that** the exciters (110) are plunger coils.

31. Device according to any one of Claims 16 to 30, **characterized in that** the exciter(s) (110) form an electro-dynamic drive and comprise at least one magnet (12) surrounded by a stator coil (13, 14), which is rigidly connected to the measurement pipe (1) and displaceably mounted in a guide (15, 16) as far as a stop.

**Revendications**

1. Procédé pour mesurer un débit massique de substances liquides, gazeuses ou solides qui est conduit à travers un tube de mesure (1), lequel est monté à rotation autour d'un axe s'étendant transversalement, de préférence perpendiculairement à son axe longitudinal et est mis en mouvement de rotation alternatif, le débit massique étant déterminé en mesurant la force de Coriolis agissant sur le tube de mesure (1) par au moins un capteur (120, 120a), **caractérisé en ce que** le mouvement de rotation est produit par une superposition de plusieurs oscillations sinusoïdales à différentes fréquences discrètes générées dans un processeur de signaux numériques (100) et transmis au tube de mesure (1) par l'intermédiaire d'un convertisseur numérique-analogique (111).

2. Procédé selon la revendication 1, **caractérisé en ce que** les fréquences discrètes se situent dans une fenêtre de fréquences qui contient la fréquence de résonance de l'oscillation du tube de mesure (1).

3. Procédé selon la revendication 2, **caractérisé en ce que** la fenêtre de fréquences a une largeur de 7 à 25 Hz et les fréquences discrètes diffèrent l'une de l'autre de fractions d'un hertz à plusieurs hertz.

4. Procédé selon l'une des revendications précédentes, **caractérisé en ce que** le signal de mesure du ou des capteurs (120, 120a) est transmis par l'intermédiaire de convertisseurs analogique-numérique (121, 121a) au processeur de signaux numériques (100) et décomposé par celui-ci en ses composantes spectrales.

5. Procédé selon la revendication 4, **caractérisé en ce que** les composantes spectrales du signal de mesure présentent les mêmes fréquences que les oscillations sinusoïdales transmises au tube de mesure (1).

6. Procédé selon la revendication 4 ou 5, **caractérisé en ce que** la fréquence de résonance est calculée à partir des amplitudes mesurées pour les composantes spectrales.

7. Procédé selon la revendication 6, **caractérisé en ce que** pour calculer la fréquence de résonance, on utilise la composante spectrale de plus grande amplitude et les deux composantes adjacentes à celle-ci pour résoudre un système d'équations dont les paramètres à déterminer sont le facteur de qualité, la fréquence de résonance et l'amplitude à la résonance.

8. Procédé selon l'une des revendications 6 ou 7, **caractérisé en ce que** la masse de la substance contenue dans le tube de mesure (1) et sa densité sont déterminées au moyen de la fréquence de résonance calculée.

9. Procédé selon l'une des revendications 2 à 8, **caractérisé en ce que** l'on effectue au préalable une détermination approchée de la fréquence de résonance en produisant un mouvement de rotation alternatif préliminaire par superposition de plusieurs oscillations sinusoïdales dont les fréquences discrètes s'étendent sur une large plage de fréquences avec un grand espacement mutuel, qu'au moyen de la composante spectrale de plus grande amplitude et des composantes adjacentes à celle-ci on détermine une valeur approchée de la fréquence de résonance, et que la fenêtre de fréquences du mouvement de rotation consécutif au mouvement de rotation préliminaire contient la valeur approchée.

10. Procédé selon l'une des revendications 2 à 9, **caractérisé en ce qu'**en cas de changement de la fréquence de résonance, la fenêtre de fréquences est déplacée dans la direction du changement.

11. Procédé selon la revendication 10, **caractérisé en ce que** la fenêtre de fréquences est déplacée seulement si la fréquence de résonance change d'une valeur prédéfinie.

12. Procédé selon l'une des revendications 9 à 11, **caractérisé en ce que** l'on effectue une nouvelle détermination approchée de la fréquence de résonance si le taux de variation de la fréquence de résonance dépasse une valeur prédéfinie.

13. Procédé selon l'une des revendications précédentes, **caractérisé en ce qu'**au moins deux capteurs (120, 120a) disposés symétriquement par rapport au centre du tube de mesure et à l'axe de rotation enregistrent le mouvement du tube de mesure (1), que les signaux de mesure sont transmis par l'intermédiaire de convertisseurs analogique-numérique (121, 121a) au processeur de signaux numériques (100) et décomposés par celui-ci en leurs composantes spectrales, et que la force de Coriolis est déterminée à partir d'une différence de phase de composantes spectrales de même fréquence, mesurées par différents capteurs (120, 120a).

14. Procédé selon la revendication 13, **caractérisé en ce que** l'on utilise la différence de phase des composantes spectrales de plus grande amplitude pour la détermination de la force de Coriolis.

**15.** Procédé selon la revendication 13, **caractérisé en ce que** l'on utilise la différence de phase des composantes spectrales présentant les plus faibles influences parasites pour la détermination de la force de Coriolis.

**16.** Dispositif pour mesurer un débit massique de substances liquides, gazeuses ou solides, avec un tube de mesure (1) monté à rotation autour d'un axe s'étendant transversalement, de préférence perpendiculairement à son axe longitudinal, à travers lequel est conduit le débit massique, avec au moins un excitateur (110) pour produire un mouvement de rotation alternatif du tube de mesure (1) et au moins un capteur (120, 120a) pour mesurer le mouvement du tube de mesure (1), le ou les capteurs (120, 120a) étant relié(s) par l'intermédiaire de convertisseurs analogique-numérique (121, 121a) à un processeur de signaux numériques (100) pour évaluer les résultats de mesure, **caractérisé en ce qu'**un signal composé d'une ou plusieurs oscillations sinusoïdales à fréquences discrètes peut être généré par le processeur de signaux numériques (100) et transmis par l'intermédiaire d'un convertisseur numérique-analogique (111) à l'excitateur ou aux excitateurs (110) pour produire le mouvement de rotation du tube de mesure (1).

**17.** Dispositif selon la revendication 16, **caractérisé en ce que** l'axe de rotation passe par le centre du tube de mesure.

**18.** Dispositif selon l'une des revendications 16 ou 17, **caractérisé par** deux capteurs (120, 120a) disposés symétriquement par rapport au centre du tube de mesure.

**19.** Dispositif selon l'une des revendications 16 à 18, **caractérisé en ce que** le tube de mesure (1) est intégré de manière mobile dans une tuyauterie et relié à celle-ci par des éléments porteurs extensibles (2).

**20.** Dispositif selon la revendication 19, **caractérisé en ce que** les éléments porteurs (2) sont conçus moins rigides dans la direction de rotation que dans les autres directions de l'espace.

**21.** Dispositif selon la revendication 19 ou 20, **caractérisé en ce que** le tube de mesure (1) et les éléments porteurs (2) sont réalisés d'une seule pièce, de préférence sous forme de pièce moulée en matière plastique.

**22.** Dispositif selon l'une des revendications 19 à 21, **caractérisé en ce que** les éléments porteurs (2) sont fixés de manière amovible à la tuyauterie.

**23.** Dispositif selon l'une des revendications 19 à 22, **caractérisé en ce que** les capteurs (120, 120a) sont des jauges extensométriques disposées sur les éléments porteurs (2).

**24.** Dispositif selon l'une des revendications 19 à 22, **caractérisé en ce que** les capteurs (120, 120a) sont des capteurs à effet Hall disposés sur les éléments porteurs (2).

**25.** Dispositif selon l'une des revendications 16 à 24, **caractérisé par** deux excitateurs (110) disposés symétriquement par rapport au centre du tube.

**26.** Dispositif selon l'une des revendications 16 à 25, **caractérisé par** des amortisseurs actifs (8) pour compenser le mouvement du tube de mesure (1) provoqué par les forces de Coriolis.

**27.** Dispositif selon l'une des revendications 16 à 26, **caractérisé en ce qu'**un boîtier (5) est disposé autour du tube de mesure (1).

**28.** Dispositif selon la revendication 27, **caractérisé en ce que** le boîtier (5) présente un couvercle amovible.

**29.** Dispositif selon l'une des revendications 16 à 28, **caractérisé par** un support de tube (11) fixé aux éléments porteurs (2) et entourant le tube de mesure (1).

**30.** Dispositif selon l'une des revendications 16 à 29, **caractérisé en ce que** les excitateurs (110) sont des bobines mobiles.

**31.** Dispositif selon l'une des revendications 16 à 30, **caractérisé en ce que** le ou les excitateur(s) (110) forme/forment un entraînement électrodynamique et présente/présentent au moins un aimant (12) entouré par une bobine de stator (13, 14), qui est relié rigidement au tube de mesure (1) et monté de manière mobile dans un guide (15, 16) jusqu'à une butée.

Parametrierung der Bandbreite

100

Generator-Algorithmus

Sinus f

Sinus f + df

Sinus f + n*df

Multisinus

X

Berechnung der Übertragungsfunkt.

Bestimmung der Resonanzfrequenz

Berechnung des korrelierten Phasenwinkels

Parameterschätzung

exakte Resonanz- frequenz
Auswertung der Dichte

Auswertung des Massendurchflusses

111

110

121

120

121a

120a

Fig.1

12

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4100006 A1